# EUROPEAN PATENT APPLICATION

(11) **EP 3 051 475 A1**
(43) Date of publication of application: **03.08.2016**
(21) Application number: 16152571.2
(22) Date of filing: 25.01.2016
(51) Int. Cl.: G06Q 10/10, G06Q 10/06

(54) **DATA ANALYSIS SYSTEM AND METHOD TO ENABLE INTEGRATED VIEW OF CUSTOMER INFORMATION**

(30) Priority: 27.01.2015 IN 270MU2015
(71) Applicant: Tata Consultancy Services Limited, Maharashtra (IN)
(72) Inventor: MAJUMDAR, Arunashish, New Jersey, New Jersey 08837 (US); KACHROO, Vinod, Martinsville, New Jersey 08836 (US); KONDREDDI, Sridhar, 500081 Hyderabad, Telangana (IN); MUTHUSAMY, Karthik, 560066 Bangalore, Karnataka (IN); SINHA, Pankaj Kumar, New Jersey, NJ New Jersey 08837 (US)
(74) Representative: Goddar, Heinz J.

(57) **Abstract**

The present disclosure discloses a system for integrated view of customer information using a unique combination of Light Weight Master Data Management, Internet of Things/Sensor Data, Social Listening and Foundational Analytics to provide actionable insights to the consuming application. The system enables enterprises to eliminate redundant data points and integration steps and get to a more unified view of customer within a short time line as compared to a multi-year implementation of a full-fledged Master Data Management (MDM), Data Warehouse (DW) and Analytical solutions. Further, the system also integrates the enterprise administrative Applications, Portals, Customer Service and Social Media in real-time. The system further provides data quality and integrity across various internal systems, big data analytics along with social listening and sensor information and provides actionable insights on customer life time value, retention, marketing strategies, and determines risk scores to arrive at product pricing.

## Description

### CROSS-REFERENCE TO RELATED APPLICATIONS AND PRIORITY

The present application claims priority to a Patent Application Serial Number 270/MUM/2015 filed before Indian Patent Office on Jan 27, 2015 and incorporates that application in its entirety.

### TECHNICAL FIELD

The present disclosure in general relates to the field of data analysis and representation. More particularly, the present disclosure relates to a system and method for improvement in a master data and an integrated customer view, in the areas of covered information domains.

### BACKGROUND

The data analysis domain has grown marginally with the growth of information technology and information technology (IT) enabled resources. With the help of IT enabled services such as data mining and data warehousing, traditional decision making has been transformed into strategic decision making. However, due to variation in data processing systems and data gathered from multiple sources, there is a gap in generating relevant information for the purpose of competitive analysis.

The existing approach for getting a full view of the customer from an enterprise perspective involves multiple tedious steps and many technologies including Master Data Management (MDM), data warehouse, predictive analysis and prescriptive analytics and is built on traditional tools which have following challenges and gaps:
- Majority of customer servicing use only a smaller data set of enterprise and analytical information. Hence, in the current setup, implementations to derive any meaningful benefit to the enterprise requires longer time lines and incurs high costs
- The current MDM technologies are limited in the information coverage and do not consider social and Customer Relationship Management (CRM) data
- Current MDM technologies are also limited in their domain coverage (e.g. Party, Product) and needs significant effort of additional data warehouse/repositories to provide extended view
- Existing technologies do not provide out of box customer analytical view of customer and depend on additional solutions to provide that view
- The existing solution approaches face challenges in scalability and performance
- Lack of seamless integration of unstructured data into the solution leading to significant effort in implementing additional components to process, store and share customer data
- The existing MDM implementation requires lot of upfront technical design and modeling activities and usually initial cycles are long just to establish the right foundation.
- Standard MDM/DW projects are very expensive to implement usually 2-3 million for small to medium size implementations, just for a few domains and integrating to analytical system is additional.

Considering the above limitations, there is a need for a better and faster MDM system which can collectively analyze data from multiple sources for the purpose of insurance and healthcare.

### SUMMARY

This summary is provided to introduce concepts related to systems and methods for integrating data from plurality of application sources and data sources, and enabling the integrated view of customer information to a consuming application, and the concepts are further described below in the detailed description.

The present disclosure relates to an architectural approach for deriving an integrated view of customer information by converging internal, external and analytical information about the customer on a light weight master data management platform to enable full understanding of the customer, contextualized insights and faster time to implementation. The light weight master data management platform is aimed at integrated view of customer information using a unique combination of Enterprise Application Data, Internet of Things/Sensor Data, Social Listening and Foundational Analytics to provide actionable insights to the consuming application. The system enables enterprises to eliminate redundant data points and integration steps and get to a more unified view of customer within a short time line as compared to a multi-year implementation of a full-fledged Master Data Management, Data Warehouse and Analytical solutions. Further, the system also integrates the enterprise administrative Applications, Portals, Customer Relationship Management systems and Social Media in real-time. The system further provides data quality and integrity across various internal systems, big data analytics along with social listening and sensor information and provides actionable insights on customer life time value, retention, marketing strategies, and determines risk scores to arrive at product pricing.

In one embodiment of the invention a system for enabling integrated view of the customer information comprising a light weight master data management module configured to receive information about the customer from one or more enterprise data sources, one or more external data sources, one or more social media data sources one or more IoT sensors and analytical information, a collaborative governance module configured to enable collaborative governance in a federated enterprise with multiple lines of businesses covering various governance council roles and an integrated customer viewer module configured to present an integrated view of the customer data via a user interface and data services.

In another embodiment of the invention a computer implemented method for enabling integrated view of customer information following the steps of providing information about the customer from one or more enterprise data sources, one or more external data sources, one or more social media data sources, one or more IoT sensors and an analytical information source to a light weight master data management module using an input/output interface, eliminating redundant data points from the received information by at least one of a data mastering techniques using the collaborative governance module, wherein the elimination results in generation of mastered received information, enabling collaborative governance in a federated enterprise with multiple lines of businesses covering various governance council roles, integrating the mastered data with enterprise administrative applications and portals, and customer services back in the real time using light weight master data management module and providing an integrated view of the customer information by an integrated viewer module to a consuming application.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to refer like/similar features and components.
Figure 1 illustrates a network implementation of a system integrating data from plurality of sources and presenting a comprehensive view of information, in accordance with an embodiment of the present disclosure.
Figure 2 illustrates the system, in accordance with an embodiment of the present disclosure.
Figure 3 illustrates a block diagram, in accordance with an embodiment of the present disclosure.
Figure 4 illustrates a framework enabled by the system, in accordance with an embodiment of the present disclosure.
Figure 5 illustrates a sample section of a data model, in accordance with an embodiment of the present disclosure.
Figure 6 illustrates facets associated with collaborative governance enabled by the system, in accordance with an embodiment of the present disclosure.

### DETAILED DESCRIPTION

The present disclosure relates to systems and methods for integrating data from plurality of application sources and data sources, and enabling the integrated view of customer information to a consuming application. Further, the system is aimed at unified integrated view of customer information using a unique combination of enterprise application data, Internet of Things (IoT)/sensor data, Social Listening data and foundational analytics data to provide actionable insights to the consuming application. The system enables enterprises to eliminate redundant data points and complex integration steps and get to a more unified integrated view of customer within a short time line. Furthermore, the system integrates the enterprise administrative applications and portals, customer service and social media in real-time. The system further provides data quality and integrity across various internal systems, big data analytics along with social listening and IoT sensors information and provides actionable insights on customer life time value, retention, marketing strategies, and determines risk scores to arrive at product pricing.

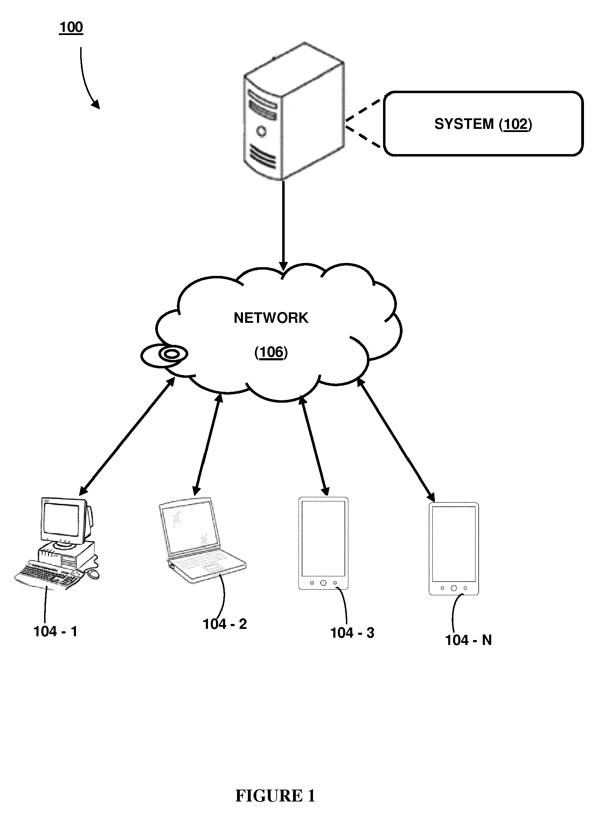

Referring now to Figure 1, a network implementation 100 of a system 102 for integrating data from a plurality of application sources and data sources, and enabling the integrated view of customer information to the consuming application. Although the present disclosure is explained by considering that the system 102 is implemented as a software application on a server, it maybe understood that the system 102 may also be implemented in a variety of computing systems, such as a laptop computer, a desktop computer, a notebook, a workstation, a mainframe computer, a network server, cloud, hand-held device and the like. It will be understood that the system 102 may be accessed by multiple users through one or more user devices 104-1, 104-2...104-N, collectively referred to as user devices 104 hereinafter, or applications residing on the user devices 104. Examples of the user devices 104 may include, but are not limited to, a portable computer, a personal digital assistant, a hand-held device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

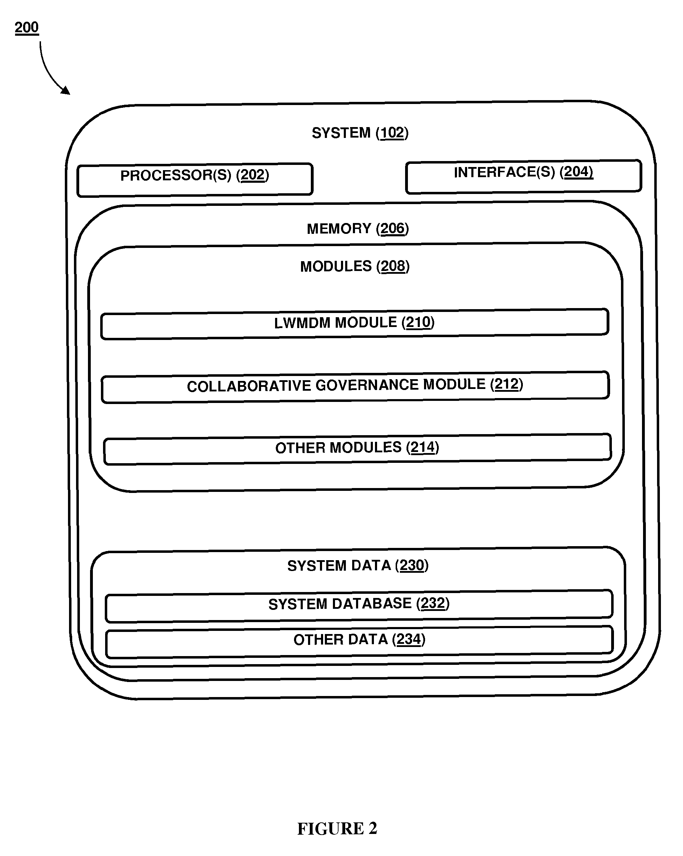

Referring now to figure 2, the system 102 is illustrated in accordance with an embodiment of the present disclosure. In one embodiment of the invention, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions stored in the memory 206.

The I/O interface 204 may include a variety of software and hardware interfaces, for example, a web interface, a graphical user interface, and the like. The I/O interface 204 may allow the system 102 to interact with a user directly or through the user devices 104. Further, the I/O interface 204 may enable the system 102 to communicate with other computing devices, such as web servers and external data servers (not shown). The I/O interface 204 may facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server. It would be appreciated that the integrated viewer module may also be known as an I/O interface module 204 of the system 102. They can be used interchangeably with respect to the understanding to the person skilled in the art.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory 206 may include modules 208 and system data 230.

The modules 208 include routines, programs, objects, components, data structures, etc., which perform particular tasks or implement particular abstract data types. In one implementation, the modules 208 may include a light weight master data management module 210, a collaborative governance module 212, and other modules 214. The other modules 214 may include programs or coded instructions that supplement applications and functions of the system 102. Further, the other modules 214 may include a receiving module 216, a standardizing module 218, an integration module 220, an identity resolution module 222 and a data quality module 224.

The system data 230, amongst other things, serves as a repository for storing data processed, received, and generated by one or more of the modules 208. The system data 230 may also include a system database 232 and other data 234. The other data 234 may include data generated as a result of the execution of one or more modules in the other modules 214. In one implementation, the user may use the client device 104 to access the system 102 via the I/O interface 204.

In a preferred embodiment of the invention, the system 102 for integrating data from a plurality of application sources and data sources, and enabling the integrated view of customer information to the consuming application. The system 102 comprises a light weight master data management module 210 and a collaborative governance module 212.

In the preferred embodiment of the invention, the light weight master data management module 210 is the central component which performs various key functions of the system 102. In the light weight master data management the implementation time would be 4-6 months with incremental expansion wherein the known MDM takes 12-18 months implementation time. The light weight master data management supports multi-domain data repository to cover party, agreement, claims. The light weight master data management supports storing both structured and unstructured data.

In the preferred embodiment of the invention, the light weight master data management module 210 accepts data from various application sources and data sources, performs standardization/cleansing, applies identity resolution and merges this data with external/social data in to a multi-domain data repository. The multi-domain data repository also provides this combined data for integration with enterprise applications. This integration takes place in near-real time based on availability of data from the sources and request for data from consumer systems.

In the preferred embodiment of the invention, the light weight master data management module 210 is an underlying data management platform. Other modules 214 in the memory 206 are configured with the light weight master data management module 210 to handle certain business functions. It would be appreciated that the unique features of light weight master data management module 210 being, readily deployable solution framework, supports incremental expansion, utilizes forward looking technologies. Furthermore, the light weight master data management module 210 is configured with the multi-domain data repository to cover party, agreement, claims and provision to store structured & unstructured data.

In the preferred embodiment of the invention, the receiving module 216 of the other modules 214 receives information about customer from a plurality of application sources, IoT/sensor data source, customer relationship management (CRM) and underwriting information sources, and analytical data source.

In the preferred embodiment of the invention, the standardization module 218 refers to processing and converting data into acceptable format. Data received in various formats will be transformed to a common format and ingesting them to build Integrated view of a customer.

In the preferred embodiment of the invention, the integration module 220 integrates the customer information from the external sources in real time with other received information about the customer. The integration module is based on APIs. The APIs are data services which are standardized data extraction routines or servicing mechanism catering various data integration needs. As extraction routines, APIs to acquire customer information in real-time or batch mode from external sources and combines it with variety of customer information and to calculate analytical scores such as Life Time Value, Risk Profile, Loyalty, Sentiments, etc. The integrated customer information and insights then can be streamed-out as real-time or batch fed to consuming applications for variety of usages using repository of APIs. The platform exposes customer data in a secure and standardized manner using APIs.

In the preferred embodiment of the invention, the Identity resolution module 222 functions in a way to master various customer data for enabling the integrated customer view. The enterprises can leverage this to create integrity across various systems and create sensible single customer view. Further, it involves automatic and manual way of de-duplicating customers' data to enable integrated customer view.

In the preferred embodiment of the invention, data quality module 224 checks technical data to ensure completeness and accuracy of the data. Key data quality rules are defined within the solution and additional data quality checks can be created based on the nature of data exists in various systems.

In the preferred embodiment of the invention, the I/O interface 204 comprises of various customer information views related to enterprise, external, social and analytical information. The I/O interface acts as the end user interface component which provides integrated views of customer based on enterprise data, external (industry/social) data and analytical data. The views are enabled for various stakeholders in the organization and delivered through multiple digital channels.

In the preferred embodiment of the invention, the collaborative governance module 212 enables a set of user functions to perform data steward activities. The data stewards are part of data council act as stakeholders within organization for data related initiatives. The collaborative governance module is responsible for enabling collaborative governance in a federated enterprise with multiple lines of businesses covering various governance council roles. The collaborative governance module enables the data stewardship process for manual investigation, correction and de-duplication of customer records, match and merge customer records, review and approval of data quality and resolving mastering issues using workflows. The data steward processes are enabled for various digital channels. Multiple data stewards acting at different point in time independently and the system 102 intelligently concluding the issue when all the steward actions are complete. Under collaborative governance module enabling feedback loop to report data quality observations across various teams and provisioning for corrective actions.

In another embodiment of the invention, the light weight master data management module 210 is enabled with a data model and data services. The Data model is an abstract logical data model on the principles of object data management which can be implemented on any SQL or NoSQL platforms. The Data model covers domains such as Insurance, Healthcare etc.

In yet another embodiment of the invention, the light weight master data management module 210 is enabled with data services. The data services are the critical component to integrate all internal and external interactions with multi-domain data repository. The interactions could be with systems or components such as user interface, other enterprise applications and external applications. The data services are abstracted to cater to a variety of lines of business. The abstract services are orchestrated for particular business process needs. All external service calls are pooled and serviced utilizing the distributed computing. The centralized services can be deployed using any existing enterprise service bus.

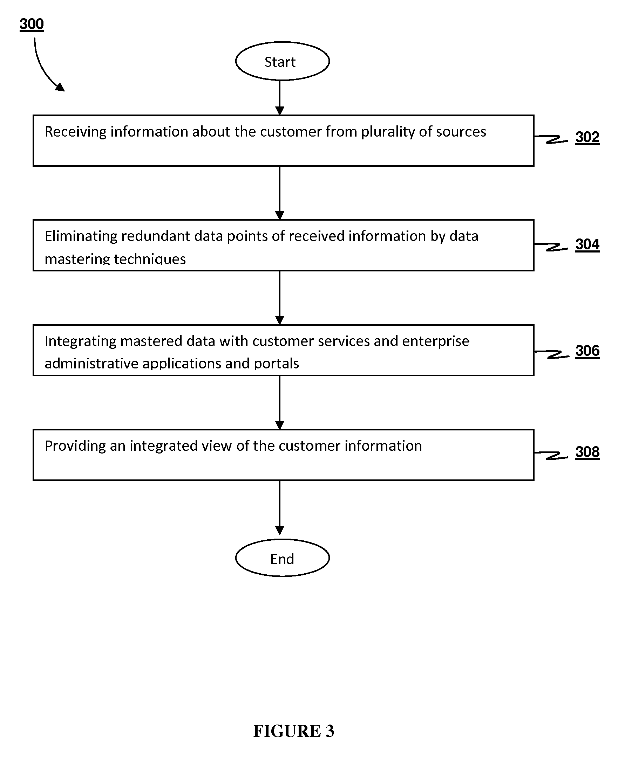

In one embodiment of the invention, figure 3 illustrates a method 300 for integrating data from a plurality of application sources and data sources, and enabling the integrated view of customer information to the consuming application. At step 302, providing information about the customer from one or more enterprise data sources, one or more external data sources, one or more social media data sources, one or more loT sensors and an analytical information source to a light weight master data management module using an input/output interface. At step 304, eliminating redundant data points from the received information by at least one of a data mastering techniques using the light weight master data management module, wherein the elimination results in generation of mastered data. At step 306, integrating the mastered data with enterprise administrative applications and portals, and customer services back in real-timer or near real time using light weight master data management module. At step 308, providing an integrated view of the customer information by an I/O interface module 204 to a consuming application.

In the preferred embodiment of the invention, the collaborative governance module 212 of the system enables the following features
a) Capture, update, and approve business and technical data definitions
b) Monitor, record the data quality issues across systems
c) Define, configure data quality rules
d) Validate the definitions, DQ rules and approve
e) Data Quality observations feedback loop across data governance stake holders
f) Enabling federated Governance across multiple lines of businesses covering various governance council roles
g) Integrate with any external data profiling results, DQ rules engines
h) Dashboard Data Quality issues status, maturity progress at individual attributes, entity, subject area, System and Enterprise level
i) Pro-active notifications for critical and threshold crossed DQ issues
j) Monitor, Report and track data quality projects, issues and improvements

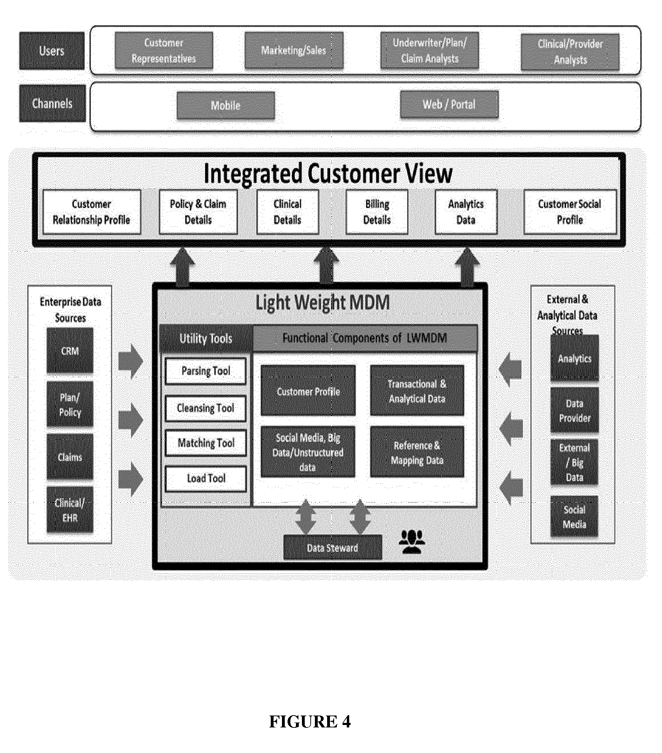

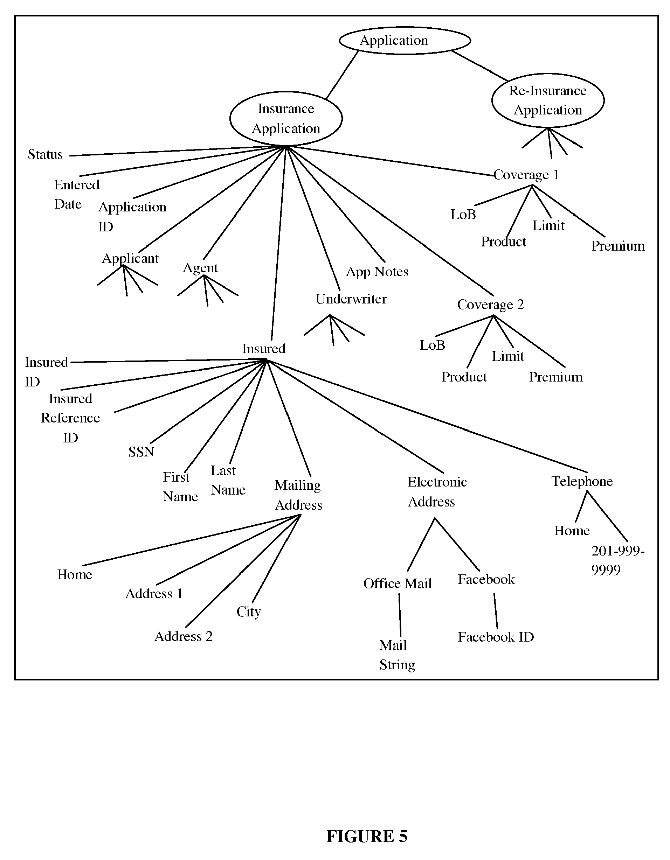

Further, figure 4 represents an abstract document collection for Insurance and Health care 'Application' domain. The data model can be extended with great ease as needed for individual insurance business needs as represented in figure 5.

In the preferred embodiment of the invention, the I/O interface 204 of the system 102 provides multiple views of customer information via the User Interface and Data Services. These views include:
- **Customer Profile view**
   a. Individual Profile
   b. Summary view - Policy and Claims
   c. Associated accounts
- **Customer Relationship Profile view**
   a. Customer Lifetime Value (From analytics)
   b. Customer value segment
   c. Customer retention rate
   d. Life Events
   e. Cross sell and Upsell opportunities (from analytics)
- **Customer Risk Profile**
   a. Risk accumulation
   b. Risk scores
   c. Habits and Lifestyle
   d. Credit score
   e. Accidents and Convictions
   f. Sensor based analytics for Home Insurance(From analytics)
- **Social Media Profile view**
   a. Social Events
   b. Social sentiment
   c. Group Influence
   d. Comments and Post
- **Analytics insights view**
   a. Cross - sell/UP sell recommendations
   b. Retention strategy
   c. Customer life event analysis
   d. Sentiment analysis
- **Customer segmentation view (From Analytics)- Corporate level**
   a. By Net worth
   b. By Persistency
   c. By Product
   d. By Sentiment- Social Media
   e. By Geography
   f. Drill down to specific customers

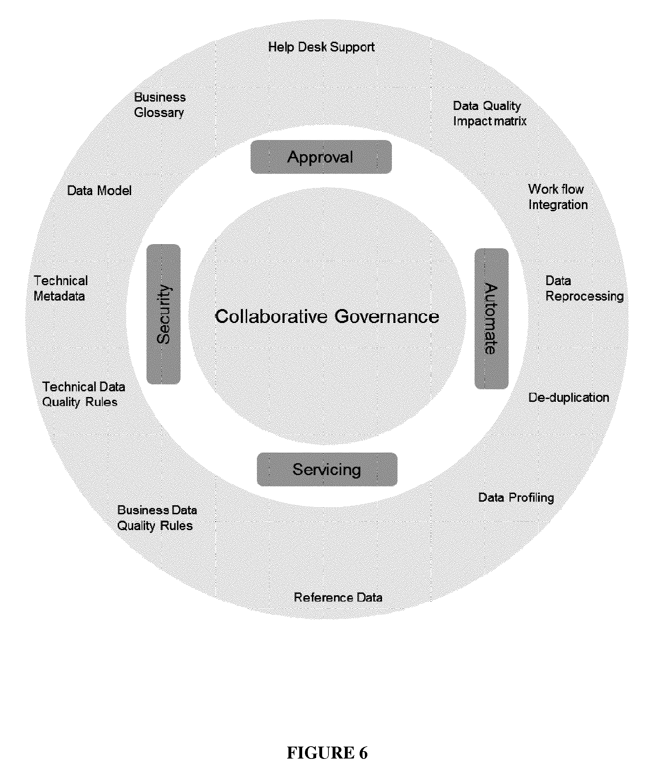

Referring figure 6 represents the various facets of collaborative governance module 204 of the system 102. The system 102 approaches a collaborative governance in a holistic manner consisting of business terms, metadata, data lineage, data quality rules, data profiling and reference data. The collaborative governance around these data management practices enables efficiencies in IT operations and better accuracies in business reporting & analytics. The workflow enables cross departmental effort in managing data with less red-tape. Further, a rule driven governance automates corrective action.

In the preferred embodiment of the invention, the collaborative governance module 212 facilitates in-stream profiling and proactive de-duplication of data. Anomalies in data are notified to groups that are responsible in maintaining and using the data through intuitive graphical user interface. All functions are controlled based on privileges and approvals are necessary for all critical data changes.

The system 102 is advantageous over the existing data analysis systems since the system 102 enables a complete view of customers for business across multiple domains. Further, the system 102 uniquely identifies customers across internal and external data sources to generate primary customer analytical information. Further, the system 102 addresses lack of business value situation being faced by many of the organization undertaking traditional MDM+DW approach. The system 102 also provides a way out for organizations/business units struggling with budgetary issues to build a traditional MDM solution. Further the system 102 enables organizations to overcome "locked" data model situations by providing schema-less database platform. The system 102 also provides features to address inability to store structured and unstructured data together in today's traditional MDM+DW solution.

Further, the unique technical features associated with the system 102 are listed as follows:
o Integrated customer view including enterprise, external (such as social, IoT) and analytical information and insights
o Combining social data with enterprise data for mastering
o Embedded Light Weight Master Data Management (LWMDM)
o Real-time synchronization
o Multi data domain such as Agreement, Product, Party, Claim etc mastering in LWMDM (in single place)
o Facilitating Collaborative Governance
o Actionable customer insights
o Insurance and Health Care domain Customer Meta Model
o Multi digital channel enablement

Although implementations of system and method for integrating data from plurality of sources and to present a comprehensive view to the consuming applications, it is to be understood that the specific features and methods are disclosed as examples of implementations for integrating data from plurality of sources and to present a comprehensive view to the consuming applications.

## Claims

1. A computer implemented method (300) for enabling integrated view of customer information, the method (300) comprising:
providing information about the customer from one or more enterprise data sources, one or more external data sources, one or more social media data sources, one or more IoT sensors and an analytical information source to a light weight master data management module (210) using an input/output interface (204);
eliminating redundant data points from the received information by at least one of a data mastering techniques using the collaborative governance module (212), wherein the elimination results in generation of mastered data;
integrating the mastered data with enterprise administrative applications and portals, and customer services in the real time using light weight master data management module (210); and
providing an integrated view of the customer information by an input/output interface (204) to a consuming application.

2. A method (300) claimed in claim 1, wherein the one or more enterprise data sources includes enterprise applications, customer relation management information, enterprise portals and electronic health records.

3. A method (300) claimed in claim 1, wherein the one or more external sources is partner ecosystem.

4. A method (300) claimed in claim 1, wherein the data mastering with multi-domains such as agreement, product, party, IoT data, customer relation management information, analytical information, claims and social media data.

5. A method (300) claimed in claim 1, wherein feedback loop is enabled by using collaborative governance module (212) to report data quality observations across various teams and provisioning for corrective actions.

6. A method (300) claimed in claim 1, wherein data stewardship process is enabled by using collaborative governance module (212) for manual investigation, correction and de-duplication.

7. A system (102) for enabling integrated view of the customer information, the system (102) comprising:
an input/output interface (204);
a memory (206); and
a processor (202) in communication with the memory (206), wherein the processor (202) comprising:
a light weight master data management module (210) is configured to receive information about the customer from one or more enterprise data sources, one or more external data sources, one or more social media data sources one or more IoT sensors and analytical information;
a collaborative governance module (212) is configured to enable data stewardship process for manual investigation, correction and de-duplication of received information about the customer; and
an input/output interface module (204) configured to present an integrated view of the customer data via a user interface and data services.

8. A system (102) claimed in claim 7, wherein the processor (202) further comprises of an identity resolution module (222).

9. A system (102) claimed in claim 8, wherein the light weight master data management module (210) is enabled with the identity resolution module (222) to eliminate redundant data points of the received information by at least one of the data mastering techniques.

10. A system (102) claimed in claim 7, wherein the processor (202) further comprises of a receiving module (216), a standardizing module (218), an integration module (220), and a data quality module (224).

11. A system (102) claimed in claim 7, wherein the light weight master data management module (210) is enabled with a data services to integrate the mastered data with enterprise administrative applications and portals, and customer services in the real time.

12. A system (102) claimed in claim 7, wherein the light weight master data management module (210) is enabled with a data model which is based on the principles of object data management, further wherein the data model include domains such as insurance and healthcare.

13. A system (102) claimed in claim 7, wherein the light weight master data management module (210) is configured to enable the data mastering with multi-domains such as agreement, product, party, , IoT data, customer relation management information and analytical information, claims and social media data.

14. A system (102) claimed in claim 7, wherein the collaborative governance module (212) is configured to enable feedback loop to report data quality observations across various teams and provisioning for corrective actions.

15. A computer readable medium storing instructions for executing a method performed by a computer processor (202), the method (300) comprising:
providing information about the customer from one or more enterprise data sources, one or more external data sources, one or more social media data sources, one or more loT sensors and an analytical information source to a light weight master data management module (210) using an input/output interface (204);
eliminating redundant data points from the received information by at least one of a data mastering techniques using the collaborative governance module (212), wherein the elimination results in generation of mastered data;
integrating the mastered data with enterprise administrative applications and portals, and customer services in the real time using light weight master data management module (210); and
providing an integrated view of the customer information by an input/output interface (204) to a consuming application.
